(19) Europäisches Patentamt
European Patent Office
Office européen des brevets

(11) **EP 3 032 225 A2**

(12) **EUROPEAN PATENT APPLICATION**

(43) Date of publication:
**15.06.2016 Bulletin 2016/24**

(51) Int Cl.:
*G01D 5/244* (2006.01)　　　*G01D 5/245* (2006.01)

(21) Application number: **15195572.1**

(22) Date of filing: **20.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.12.2014 JP 2014249449**

(71) Applicant: **Kabushiki Kaisha Yaskawa Denki Kitakyushu-shi, Fukuoka 806-0004 (JP)**

(72) Inventors:
• **TAKADA, Hiroshi**
  **Kitakyushu-shi, Fukuoka 806-0004 (JP)**

• **ARINAGA, Yuji**
  **Kitakyushu-shi, Fukuoka 806-0004 (JP)**
• **YOSHIDOMI, Shiro**
  **Kitakyushu-shi, Fukuoka 806-0004 (JP)**
• **MUROKITA, Ikuma**
  **Kitakyushu-shi, Fukuoka 806-0004 (JP)**
• **UEMURA, Koji**
  **Kitakyushu-shi, Fukuoka 806-0004 (JP)**
• **MURAOKA, Jiro**
  **Kitakyushu-shi, Fukuoka 806-0004 (JP)**

(74) Representative: **Viering, Jentschura & Partner mbB**
**Patent- und Rechtsanwälte**
**Grillparzerstraße 14**
**81675 München (DE)**

(54) **ENCODER AND MOTOR WITH ENCODER**

(57)　　An encoder includes an absolute pattern, a light source, and a plurality of light reception elements. The absolute pattern is disposed in a measurement direction. The light source is configured to emit light to the absolute pattern. The plurality of light reception elements are arranged in the measurement direction and configured to receive the light emitted from the light source and transmitted through or reflected by the absolute pattern. The plurality of light reception elements include at least one first light reception element having an edge in the measurement direction. The edge is inclined relative to a width direction perpendicular to the measurement direction.

FIG. 2

## Description

## BACKGROUND

### FIELD OF THE INVENTION

The present invention relates to an encoder and a motor with an encoder.

### DISCUSSION OF THE BACKGROUND

Japanese Patent No. 4945674 discloses an encoder including an absolute light reception element group. The absolute light reception element group includes a plurality of light reception elements to individually detect optical signals from an absolute pattern. The absolute pattern uniquely indicates an absolute position of a rotary disk using a combination of positions of reflection slits within a predetermined angle.

The contents of Japanese Patent No. 4945674 are incorporated herein by reference in their entirety.

In order to improve detection accuracy of the encoder, there is a need for optimizing the apparatus configuration of the encoder.

Embodiments of the present disclosure have been made in view of the above-described circumstances. It is an object of the present disclosure to provide an encoder and a motor with an encoder that ensure improved detection accuracy.

### SUMMARY

According to one aspect of the present disclosure, an encoder includes an absolute pattern, a light source, and a plurality of light reception elements. The absolute pattern is disposed in a measurement direction. The light source is configured to emit light to the absolute pattern. The plurality of light reception elements are arranged in the measurement direction and configured to receive the light emitted from the light source and transmitted through or reflected by the absolute pattern. The plurality of light reception elements include at least one first light reception element having an edge in the measurement direction. The edge is inclined relative to a width direction perpendicular to the measurement direction.

According to another aspect of the present disclosure, a motor includes the above-described encoder.

The embodiments improve the detection accuracy of the encoder.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

FIG. 1 is a diagram illustrating an exemplary configuration of a servo system including an encoder according to an embodiment;
FIG. 2 is a diagram illustrating an exemplary configuration of the encoder;
FIG. 3 is a diagram illustrating an exemplary configuration of a disk of the encoder;
FIG. 4 is a diagram illustrating exemplary patterns of the disk;
FIG. 5 is a diagram illustrating an exemplary configuration of an optical module of the encoder;
FIG. 6 is a cross-sectional view of the disk and the optical module, taken along the line A-A in FIGs. 4 and 5, illustrating an example of light reception;
FIG. 7 illustrates an exemplary light intensity distribution of reflected light on a substrate of the optical module;
FIG. 8 is a diagram illustrating exemplary setting of a shape and dimensions of a light reception element on the optical module;
FIG. 9 is a diagram illustrating an exemplary change property of an analog detection signal from a rectangular light reception element without inclined edges relative to a width direction;
FIG. 10 is a diagram illustrating an exemplary change property of an analog detection signal in the case of a light reception element with inclined edges relative to the width direction;
FIG. 11 is a graph illustrating an exemplary difference between the change property of the amount of light received by the light reception element without inclined edges relative to the width direction and the change property of the amount of light received by the light reception element with the inclined edges relative to the width direction;
FIG. 12 is a diagram illustrating exemplary shapes of a plurality of light reception elements according to a modification in which the edges of each of the light reception elements on both sides of each light reception element in a measurement direction are inclined relative to the width direction;
FIG. 13 is a diagram illustrating exemplary shapes of a plurality of light reception elements according to a modification in which the center light reception element in the measurement direction has a trapezoidal shape; and
FIG. 14 is a diagram illustrating exemplary shapes of a plurality of light reception elements according to a modification in which the light reception elements are trimmed on the corners of the edge of each light reception element on the side opposite to the light source side.

### DESCRIPTION OF THE EMBODIMENTS

The embodiments will now be described with reference to the accompanying drawings, wherein like reference numerals designate corresponding or identical elements throughout the various drawings.

The encoders according to the following embodiments are applicable to various types of encoders, including rotary type encoders and linear type encoders. In the following description, a rotary type encoder will be taken as an example to facilitate understanding of the encoder. In other types of encoder applications, suitable modifications may be made, including replacing a measurement target in the rotary type encoder with a measurement target in the linear type encoder, that is, replacing a disk with a linear scale, which will not be elaborated herein.

1. Servo System

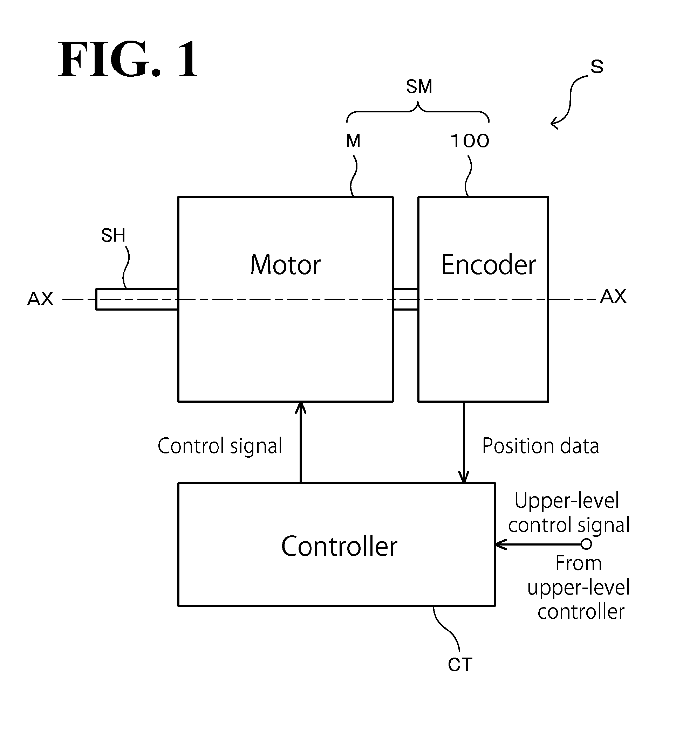

First, by referring to FIG. 1, a configuration of a servo system including an encoder according to this embodiment will be described. As illustrated in FIG. 1, a servo system S includes a servomotor SM and a controller CT. The servomotor SM includes an encoder 100 and a motor M.

The motor M is an exemplary motive power source without the encoder 100.

The motor M is a rotary motor in which the rotor (not illustrated) rotates relative to the stator (not illustrated). A shaft SH is secured on the rotor and rotated about an axis AX to output rotational force.

Although the motor M alone is occasionally referred to as a servo motor, the servomotor SM as used in this embodiment refers to a configuration including the encoder 100. That is, the servomotor SM is an example of the motor with an encoder. For convenience of description, the following description is concerning such a servomotor that the motor with the encoder is controlled to follow a target value of a position, speed, or another parameter. It should be noted, however, that the motor with the encoder will not necessarily be limited to the servomotor. The motor with the encoder encompasses motors not used in servo systems, insofar as the encoder is provided. For example, the output from the encoder may be used for display purposes only.

There is no particular limitation to the motor M insofar as the encoder 100 is capable of detecting, for example, position data or other data. Also the motor M will not be limited to an electric motor, which utilizes electricity as power source. Examples of motors that use other power sources include hydraulic motors, pneumatic motors, and steam motors. In the following description, the motor M is an electric motor for convenience of description.

The motor M is coupled to the shaft SH on the opposite side of the motor M's output side of rotational force. This configuration, however, should not be construed in a limiting sense; the encoder 100 may be coupled to the shaft SH on the motor M's output side of rotational force. The encoder 100 detects the position of the shaft SH (rotor), thereby detecting the position of the motor M (which will be also referred to as rotational angle), and then outputs position data indicating the position. It is noted that the encoder 100 may not necessarily be coupled directly to the motor M. The encoder 100 may be coupled to the motor M through a mechanism such as a brake device, a reduction gear, and a rotation direction convertor.

Instead of or in addition to the position of the motor M, the encoder 100 may detect at least one of the speed (also referred to as "rotation speed" or "angular velocity") and the acceleration (also referred to as "rotational acceleration" or "angular acceleration") of the motor M. The speed and the acceleration of the motor M are detectable by exemplary processing such as first or second order time-differential of the position, and counting detection signals (such as an incremental signal, described later) for a predetermined period of time. In the following description, the physical amount detected by the encoder 100 is the position, for convenience of description.

The controller CT acquires position data output from the encoder 100, and controls the rotation of the motor M based on the position data. Thus, in this embodiment, in which the motor M is an electric motor, the controller CT controls current, voltage, or the like to be applied to the motor M based on the position data so as to control the rotation of the motor M. The controller CT may also acquire an upper level control signal from an upper level controller, not illustrated. In this case, the controller CT may control the motor M to output from the shaft SH of the motor M a rotational force with which the position or the like indicated by the upper level control signal is achievable. When the motor M is driven by another power source such as a hydraulic power source, a pneumatic power source, and a steam power source, the controller CT may control the supply from the power source to control the rotation of the motor M.

2. Encoder

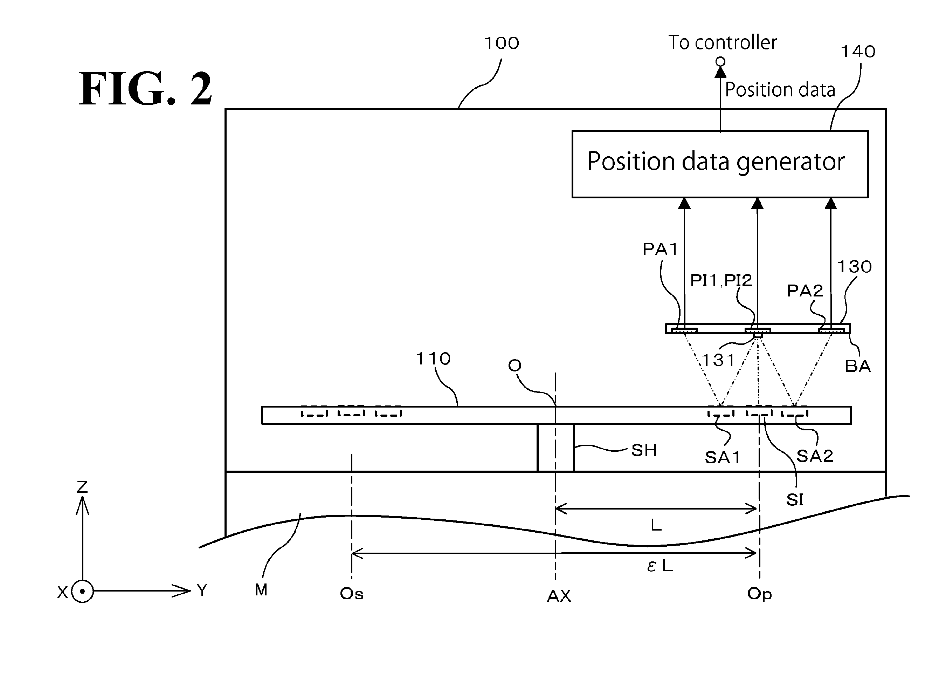

Next, the encoder 100 according to this embodiment will be described. As illustrated in FIG. 2, the encoder 100 includes a disk 110, an optical module 130, and a position data generator 140. The encoder 100 is what is called a reflective encoder, in which a light source 131 and light reception arrays PA1 and PA2 of the optical module 130 are on the same side relative to patterns SA1 and SA2 of the disk 110. The reflective encoder, however, should not be construed as limiting the encoder 100. Another possible embodiment is a transmission encoder, in which the light source 131 and the light reception arrays PA1 and PA2 are opposed to each other across the disk 110. For convenience of description, the encoder 100 is a reflection encoder in the following description.

For convenience of description of the encoder 100, the directions including the upper and downward directions are defined in the following manner and used as necessary. Referring to FIG. 2, the direction in which the disk 110 faces the optical module 130, that is, the positive direction in a Z axis direction is defined as "upward direction", while the negative direction in the Z axis direction is defined as "downward direction". It should be noted, however, that the directions including the upward and downward directions are subject to change in accordance with how the encoder 100 is installed. Hence, the definitions should not be construed as limiting the positional relationship of the components of the encoder 100. 2-1. Disk

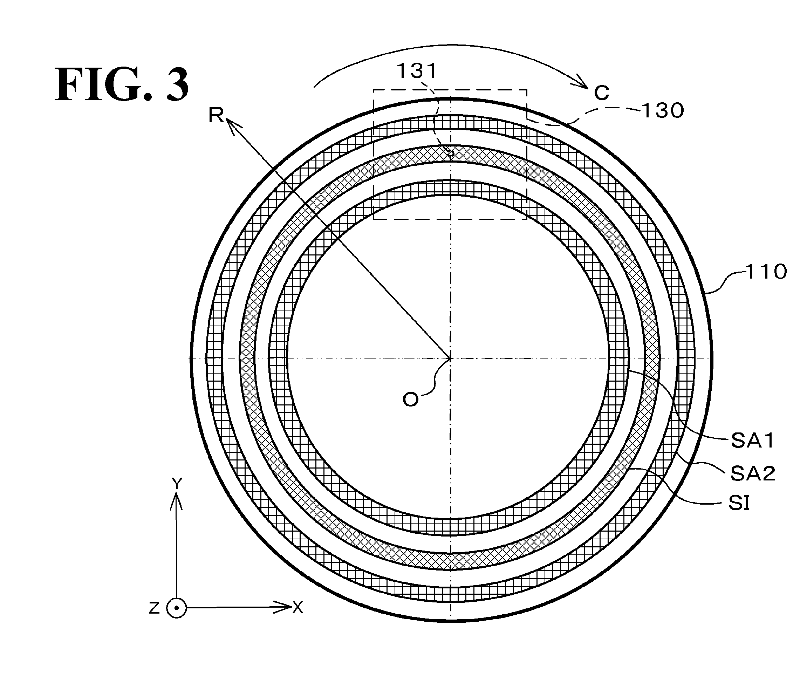

As illustrated in FIG. 3, the disk 110 has a circular plate shape with its disk center O approximately matching the axis AX. The disk 110 is coupled to the shaft SH of the motor M so that the disk 110 rotates together with the rotation of the shaft SH. In this embodiment, the disk 110 is taken as an example of the measurement target for measuring the rotation of the motor M. The measurement target may be any of other members than the disk 110, examples including an end surface of the shaft SH. While in the embodiment illustrated in FIG. 2 the disk 110 is directly coupled to the shaft SH, the disk 110 may alternatively be coupled to the shaft SH through a coupling member such as a hub.

As illustrated in FIG. 3, the disk 110 includes a plurality of patterns SA1, SA2, and SI. The disk 110 rotates together with the driving of the motor M, whereas the optical module 130 is fixed while facing part of the disk 110. Thus, together with the driving of the motor M, the patterns SA1, SA2, and SI and the optical module 130 move relative to each other in a measurement direction (which is the direction indicated by the arrow C in FIG. 3, and hereinafter occasionally referred to as "measurement direction C").

As used herein, the term "measurement direction" refers to a measurement direction in which the optical module 130 optically measures the patterns formed on the disk 110. In a rotary type encoder in which the measurement target is a disk, as in the rotary type encoder 100 with the disk 110 according to this embodiment, the measurement direction matches the circumferential direction around the center axis of the disk 110. Another example is a linear type encoder, in which the measurement target is a linear scale and a rotor moves relative to a stator. In this case, the measurement direction is a direction along the linear scale.

2-2. Optical Detection Mechanism

The patterns SA1, SA2, and SI, the optical module 130, and other elements constitute an optical detection mechanism.

2-2-1. Patterns

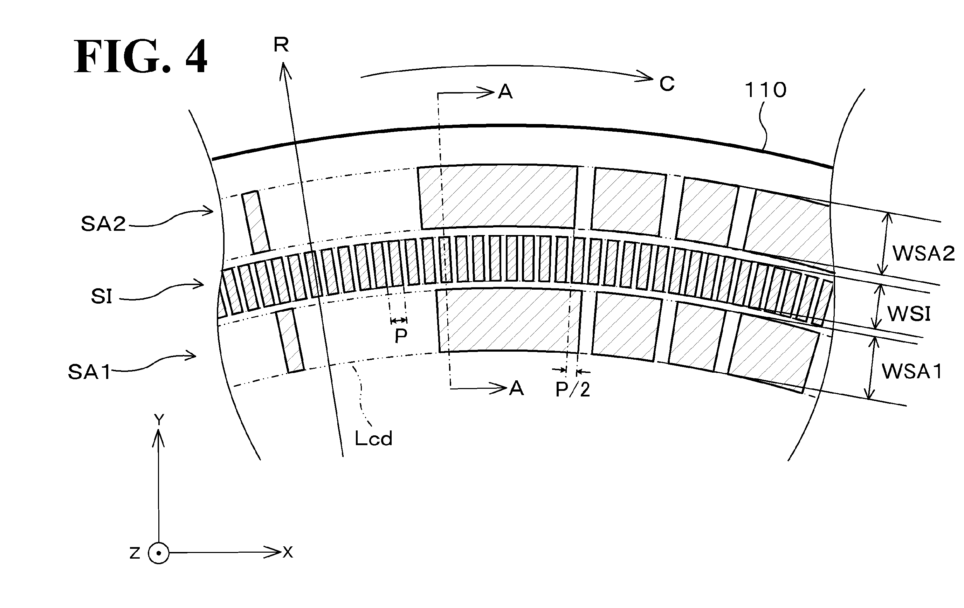

Each of the patterns is a track in the form of a ring disposed around the disk center O on the upper surface of the disk 110. Each pattern includes a plurality of reflection slits (hatched with slanted lines in FIG. 4) arranged throughout the track in the measurement direction C. Each of the reflection slits reflects light emitted from a light source 131.

The disk 110 is made of a light reflecting material such as metal. For a non-light-reflecting portion of the surface of the disk 110, a material of low reflectance (for example, chromic oxide) is disposed by a method such as application. Thus, the reflection slits are formed at other portions than where the low reflectance material is. It is also possible to form the reflection slits by making the non-light-reflecting portion a coarse surface by sputtering or a similar method to ensure low reflectance.

There is no particular limitation to the material of the disk 110 and the method of preparing the disk 110. An exemplary material of the disk 110 is a light transmitting material such as glass and transparent resin. In this case, the reflection slits may be formed by mounting a light reflecting material (such as aluminum) on the surface of the disk 110 by deposition or another method.

When the encoder 100 is the above-mentioned transmission encoder, each pattern formed on the disk 110 includes a plurality of transmission slits throughout the track in the measurement direction C. Each of the transmission slits transmits light emitted from the light source 131.

Three patterns are disposed next to each other on the upper surface of the disk 110 in a width direction (direction indicated by the arrow R in FIG. 3, and hereinafter occasionally referred to as "width direction R"). The term "width direction" refers to a radial direction of the disk 110, which is a direction approximately perpendicular to the measurement direction C. The dimension of each pattern in the width direction R corresponds to the width of each pattern. The three patterns are coaxial and arranged in the order: SA1, SI, SA2 in the width direction R. Each pattern will be described in more detail by referring to FIG. 4, which is a partially enlarged view of an area of the disk 110 facing the optical module 130.

2-2-1-1. Absolute Pattern

As illustrated in FIG. 4, the pattern SA1 includes a plurality of reflection slits arranged throughout the circumference of the disk 110 in an absolute pattern in the measurement direction C. Similarly, the pattern SA2 includes a plurality of reflection slits arranged throughout the circumference of the disk 110 in an absolute pattern in the measurement direction C. The patterns SA1 and SA2 are examples of the absolute pattern.

The term "absolute pattern" refers to a pattern in which the position, ratio, or another parameter of the reflection slits within the angle at which the optical module 130, described later, is opposed to the light reception arrays is uniquely determined on the circumference of the disk 110. In the exemplary absolute pattern illustrated in FIG. 4, where the motor M is at one angular position, a plurality of light reception elements of the opposing light reception array form a combination of bit patterns indicating detection or undetection, and the combination uniquely indicates the absolute position representing the angular position. The term "absolute position" refers to an angular position relative to an origin of the disk 110 on the circumference of the disk 110. The origin is set at a convenient angular position on the circumference of the disk 110, and the absolute pattern is formed based on the origin.

This exemplary pattern ensures generation of a pattern that one-dimensionally indicates the absolute position of the motor M using bits corresponding to the number of the light reception elements of the light reception array. This configuration, however, should not be construed as limiting the absolute pattern. For example, it is possible to use a pattern that multi-dimensionally indicates the absolute position using bits corresponding to the number of the light reception elements. It is also possible to use various other patterns than the predetermined bit pattern; examples include a pattern in which a physical quantity such as the amount or the phase of the light received by the light reception elements changes to uniquely indicate the absolute position, and a pattern in which a code sequence of the absolute pattern is modulated.

In this embodiment, two patterns SA1 and SA2 are formed in similar absolute patterns, and the absolute patterns are offset from each other by a length of 1/2 bit in the measurement direction C. This offset amount corresponds to, for example, half a pitch P of the reflection slit of the pattern SI. If the patterns SA1 and SA2 are not offset from each other in the case of using one-dimensional absolute pattern to indicate the absolute position as in this embodiment, the following may occur. When the light reception elements of the light reception arrays PA1 and PA2 face the edges of the reflection slits or face a vicinity of the edges of the reflection slits, an area of bit pattern transition occurs. In the area of bit pattern transition, the accuracy of detecting the absolute position may degrade. In view of this, the patterns SA1 and SA2 are offset from each other in this embodiment. For example, when the absolute position to be obtained through the pattern SA1 is based on the area of bit pattern transition, a detection signal obtained through the pattern SA2 is used to calculate the absolute position. Inversely, when the absolute position to be obtained through the pattern SA2 is based on the area of bit pattern transition, a detection signal obtained through the pattern SA1 is used to calculate the absolute position. This improves accuracy of detecting the absolute position. This configuration necessitates uniformity of the amounts of light received by the light reception arrays PA1 and PA2. Still, this configuration is realized in this embodiment by arranging the light reception array PA1 and the light reception array PA2 approximately at the same distance from the light source 131.

Instead of the absolute patterns of the patterns SA1 and SA2 being offset from each other, the light reception arrays PA1 and PA2, which respectively correspond to the patterns SA1 and SA2, may be offset from each other.

The number of the absolute patterns should not be limited to two; it is also possible to use one absolute pattern. For convenience of description, the two patterns SA1 and SA2 are formed in the following description.

2-2-1-2. Incremental Pattern

In contrast, the pattern SI includes a plurality of reflection slits arranged throughout the circumference of the disk 110 in an incremental pattern in the measurement direction C.

The term "incremental pattern" refers to a pattern of regular repetition of slits at a predetermined pitch, as illustrated in FIG. 4. The term "pitch" refers to an arrangement interval of two adjacent reflection slits of the pattern SI, which has the incremental pattern. As illustrated in FIG. 4, the pattern SI has a pitch of P. The incremental pattern is different from the absolute pattern, which indicates the absolute position using bits each indicating whether each of the plurality of light reception elements has detected light or not. Instead, the incremental pattern uses a sum of detection signals obtained by one or more light reception elements to indicate a position of the motor M on a one-pitch basis or within one pitch. Thus, even though the incremental pattern does not indicate the absolute position of the motor M, the incremental pattern ensures much higher accuracy of indicating the position of the motor M than the accuracy realized by the absolute pattern.

In this embodiment, the reflection slits of the patterns SA1 and SA2 each have a minimal length in the measurement direction C that is substantially identical to the pitch P of the reflection slits of the pattern SI. As a result, the absolute signals based on the patterns SA1 and SA2 each have a resolution that substantially matches the number of the reflection slits of the pattern SI. This configuration, however, should not be construed as limiting the minimal length of the reflection slits of the patterns SA1 and SA2. The number of the reflection slits of the pattern SI is preferably equal to or greater than the resolution of each absolute signal.

2-2-2. Optical Module

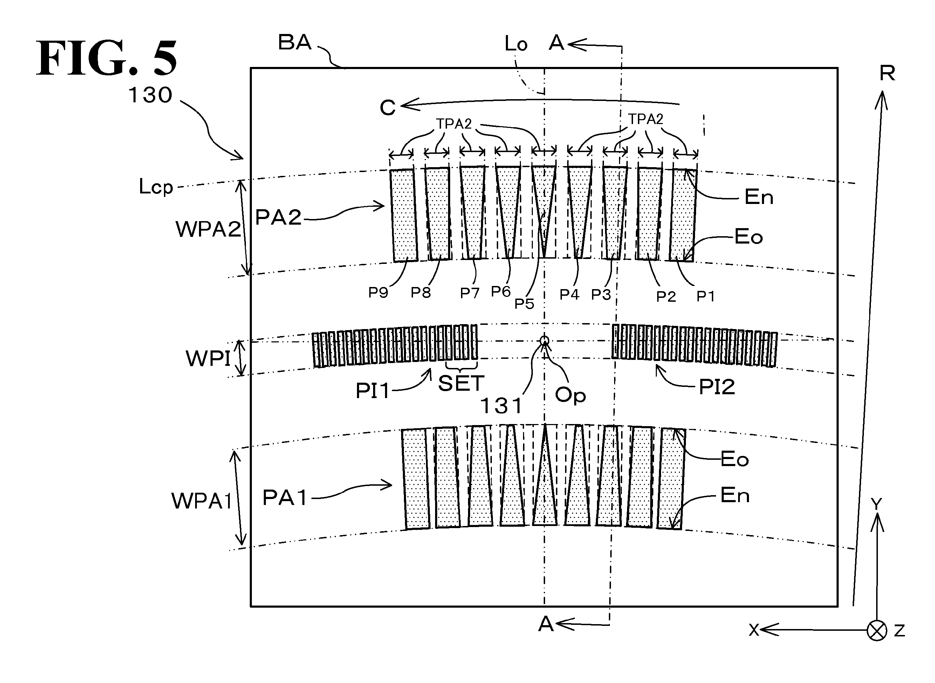

As illustrated in FIGs. 2 and 5, the optical module 130 is a single substrate BA, which is parallel to the disk 110. This ensures a thin encoder 100 and facilitates the production of the optical module 130. Together with the rotation of the disk 110, the optical module 130 moves in the measurement direction C relative to the patterns SA1, SA2, and SI. The optical module 130 may not necessarily have a form of a single substrate BA; the components of the optical module 130 may be a plurality of substrates insofar as these substrates are concentrated together. Alternatively, the optical module 130 may have other than a form of a substrate.

As illustrated in FIGs. 2 and 5, on the surface of the substrate BA facing the disk 110, the optical module 130 includes the light source 131, and includes the plurality of light reception arrays PA1, PA2, PI1, and PI2.

2-2-2-1. Light Source

As illustrated in FIG. 3, the light source 131 is a position facing the pattern SI. When the three patterns SA1, SA2, and SI pass through a position facing the optical module 130, the light source 131 emits light to the portions of the three patterns SA1, SA2, and SI that face the optical module 130.

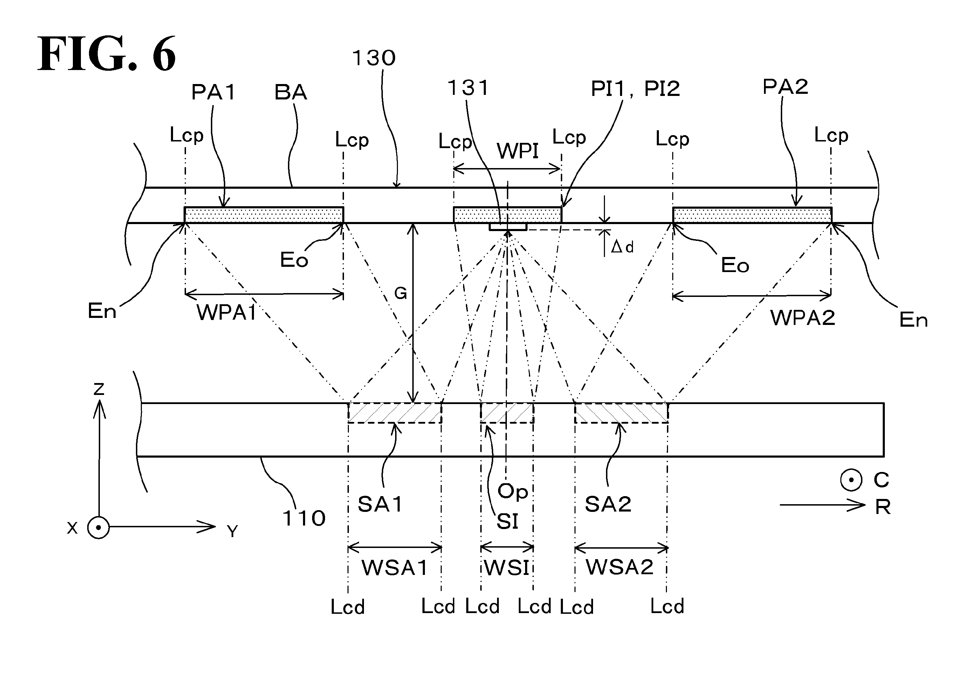

There is no particular limitation to the light source 131 insofar as the light source 131 is capable of emitting light to the area intended to be irradiated. A non-limiting example of the light source 131 is a light emitting diode (LED). As illustrated in FIG. 6, the light source 131 is formed as a point light source, where no optical lens or like element is particularly disposed, and emits diffused light from a light emitting portion. By the term "point light source", it is not necessarily meant to be an accurate point. It will be appreciated that light can be emitted from a finite emission surface of a light source insofar as the light source is capable of emitting diffused light from an approximately pointed position in design viewpoints or in operation principle viewpoints. The term "diffused light" may not necessarily be light that can be emitted in every direction from the point light source. The diffused light encompasses light emitted and diffused in a limited direction. That is, the diffused light encompasses any light that is more diffusible than parallel light. The use of a point light source in this manner ensures that the light source 131 uniformly emits light to the three patterns SA1, SA2, and SI when the three patterns SA1, SA2, and SI are passing through the position facing the light source 131. Additionally, neither concentration nor diffusion of light is performed by an optical element. This configuration eliminates or minimizes an error caused by the optical element, and increases straightness of the light toward the patterns.

2-2-2-2. Enlargement Ratio of Projected Images

The plurality of light reception arrays are disposed around the light source 131 and respectively correspond to the patterns. Each of the plurality of light reception arrays includes a plurality of light reception elements (dotted portions in FIG. 5) that receive light reflected by the reflection slits of a corresponding pattern. As illustrated in FIG. 5, the plurality of light reception elements are aligned in the measurement direction C.

As illustrated in FIG. 6, the light source 131 emits diffused light. Thus, an image of the patterns projected on the optical module 130 is enlarged by a predetermined enlargement ratio, $\varepsilon$, that depends on the optical path length. As illustrated in FIGs. 4 to 6, assume that the patterns SA1, SA2, and SI respectively have lengths $WSA1$, $WSA2$, and $WSI$ in the width direction R, and that reflections of the light reflected by the patterns SA1, SA2, and SI respectively have lengths $WPA1$, $WPA2$, and $WPI$ in the width direction R when the reflections are projected on the optical module 130. Under the assumption, $WPA1$, $WPA2$, and $WPI$ are respectively $\varepsilon$ times $WSA1$, $WSA2$, and $WSI$. In this embodiment, as illustrated in FIGs. 5 and 6, the length of each light reception element of each light reception array in the width direction R is substantially equal to the length in the width direction R of the shape of the projection of each slit on the optical module 130. This configuration, however, should not be construed as limiting the length of each light reception element in the width direction R.

Similarly, the optical module 130 in the measurement direction C is affected by the enlargement ratio $\varepsilon$, that is, the disk 110 in the measurement direction C as enlarged by the enlargement ratio $\varepsilon$ is projected on the optical module 130. This will be described in more detail below by referring to the optical module 130 in the measurement direction C with the light source 131 located at the position illustrated in FIG. 2, for ease of description. The disk 110 as viewed in the measurement direction C forms a circle centered around the axis AX. When, in contrast, this circle is projected on the optical module 130, the center of the circle projected on the optical module 130 is at a distance $\varepsilon L$ from an optical center Op, which is a position on the surface of the disk 110 corresponding to the light source 131. Distance L denotes the distance between the axis AX and the optical center Op, and distance $\varepsilon L$ denotes the distance $L$ enlarged by the enlargement ratio $\varepsilon$. In FIG. 2, the center of the circle projected on the optical module 130 is indicated by Os, which is referred to as measurement center. Thus, the circle projected on the optical module 130 defines a line that has a radius of $\varepsilon L$ and that is centered around the measurement center Os, which is on an imaginary line crossing the optical center Op and the axis AX and which is spaced apart from the optical center Op toward the axis AX by the distance $\varepsilon L$.

As illustrated in FIGs. 4 to 6, circular arc lines Lcd and Lcp indicate correspondence between the length of the disk 110 in the measurement direction C and the length of optical module 130 in the measurement direction C. As illustrated in FIG. 4 and other drawings, the line Lcd is along the measurement direction C on the disk 110. As illustrated in FIG. 5 and other drawings, the line Lcp is along the measurement direction C on the substrate BA (the line Lcp is the line Lcd projected on the optical module 130).

As illustrated in FIG. 6, G denotes the length of the gap between the optical module 130 and the disk 110, and $\Delta d$ denotes the amount by which the light source 131 protrudes from the substrate BA. Here, the enlargement ratio $\varepsilon$ is represented by the following Formula (1).

[Formula 1]

$$\varepsilon = (2G - \Delta d) / (G - \Delta d)$$

2-2-2-3. Absolute and Incremental Light Reception Arrays

A non-limiting example of the individual light reception element is a photodiode. Each light reception element has a shape having its own predetermined light reception area, and outputs an analog detection signal having a magnitude in accordance with the total amount of light received using the entire light reception area (hereinafter referred to as "amount of light reception"). The photodiode should not be construed as limiting the individual light reception element. There is no particular limitation to the light reception element insofar as the light reception element is capable of receiving light emitted from the light source 131 and converting the received light into an electrical signal.

The light reception arrays according to this embodiment are disposed such that the light reception arrays respectively correspond to the three patterns SA1, SA2, and SI. Specifically, the light reception array PA1 receives light reflected by the pattern SA1, and the light reception array PA2 receives light reflected by the pattern SA2. The light reception arrays PI1 and PI2 receive light reflected by the pattern SI. The light reception array PI1 and the light reception array PI2 are separate from each other, with a gap between the light reception array PI1 and the light reception array PI2. Still, the light reception array PI1 and the light reception array PI2 correspond to the same track. Thus, the number of light reception arrays corresponding to one pattern may not necessarily be one; a plurality of light reception arrays may correspond to one pattern.

The light source 131 and the light reception arrays PA1 and PA2 are arranged in the manner illustrated in FIG. 5. Specifically, one set of the light reception array PA1 and one set of the light reception array PA2, which respectively correspond to the absolute patterns, are disposed at positions parallel to each other and offset from each other with the light source 131 between the light reception arrays PA1 and PA2 in the width direction R. In this embodiment, the light reception array PA1 is disposed further inward than the light reception array PA2, while the light reception array PA2 is disposed further outward than the light reception array PA1. The light reception arrays PA1 and PA2 are at an approximately equal distance from the light source 131. Each of the light reception arrays PA1 and PA2 has a shape line-symmetrical about a line Lo, which passes through the light source 131 (optical center Op) and which is parallel to the Y axis. The plurality of (nine in this embodiment) light reception elements of the light reception array PA1 are aligned in the measurement direction C (line Lcp) at constant pitches, and the plurality of light reception elements of the light reception array PA2 are aligned in the measurement direction C (line Lcp) at constant pitches. Shapes of the plurality of light reception elements will be described later.

In this embodiment, the absolute patterns are one-dimensional, and each of the light reception arrays PA1 and PA2, which correspond to the one-dimensional patterns, includes a plurality of light reception elements (nine light reception elements in this embodiment). The plurality of light reception elements are aligned in the measurement direction C (line Lcp) to receive light reflected by the reflection slits of the pattern SA1 or SA2 corresponding to the plurality of light reception elements. As described above, each individual reception or non-reception of light is indicated by a bit, and the absolute position is indicated by nine bits. The light reception signals received by the plurality of light reception elements are processed independently of each other in the position data generator 140 (see FIG. 2), and then the absolute position coded into a serial bit pattern is decoded using a combination of the light reception signals. These light reception signals obtained from the light reception arrays PA1 and PA2 are each referred to as "absolute signal". When some other absolute patterns than the absolute patterns used in this embodiment are used, the light reception arrays PA1 and PA2 respectively would have configurations corresponding to the some other absolute patterns. It is noted that the number of the light reception elements of the light reception arrays PA1 and PA2 may be other than nine, and that the number of bits of the absolute signals will not be limited to nine.

The light source 131 and the light reception arrays PI1 and PI2 are arranged in the manner illustrated in FIG. 5. Specifically, the light reception arrays PI1 and PI2, which respectively correspond to the incremental patterns, are aligned with each other across the light source 131 in the measurement direction C. More specifically, the light reception arrays PI1 and PI2 are line-symmetrical about the line Lo. The light source 131 is interposed between the light reception arrays PI1 and PI2, which constitute one track in the measurement direction C.

The light reception arrays PI1 and PI2 include a plurality of light reception elements aligned in the measurement direction C (line Lcp) to receive light reflected by the reflection slits of the pattern SI, which correspond to the light reception arrays PI1 and PI2. These light reception elements have approximately identical shapes (approximately rectangular shapes in this embodiment).

In this embodiment, a set of four light reception elements (indicated "SET" in FIG. 5) is provided in one pitch of the incremental pattern of the pattern SI (the one pitch used here is one pitch that is projected on the optical module 130, that is, $\varepsilon \times P$). Similarly, a plurality of additional sets of four light reception elements are aligned in the measurement direction C. In the incremental pattern, the reflection slits are repeatedly formed on a one-pitch basis. Through rotation of the disk 110, the light reception elements generate periodic signals that constitute one period (referred to as 360° in electrical angle). Since four light reception elements constitute one set corresponding to one pitch, adjacent two light reception elements among the four light reception elements output periodic signals that are incremental phase signals and that are phase-shifted relative to each other by 90°. The incremental phase signals will be respectively referred to as an A+ phase signal, a B+ phase signal (which is a signal phase-shifted relative to the A+ phase signal by 90°), an A- phase signal (which is a signal phase-shifted relative to the A+ phase signal by 180°), and a B- phase signal (which is a signal phase-shifted relative to the B+ phase signal by 180°).

The incremental pattern indicates the position of the motor M in one pitch. The four signals of different phases in one set respectively correspond to four signals of different phases in another set. That is, the value of one signal of a phase changes in a similar manner to the value of the corresponding signal of the same phase in the another set. Thus, the signals of the same phases are added together throughout the plurality of sets. Hence, four signals that are phase-shifted relative to each other by 90° are detected from the plurality of light reception elements of the light reception array PI illustrated in FIG. 5. That is, four signals phase-shifted relative to each other by 90° are output from each of the light reception arrays PI1 and PI2. These four signals will be referred to as "incremental signals".

In this embodiment, four light reception elements are accommodated in one set corresponding to one pitch of the incremental pattern, and the light reception array PI1 and the light reception array PI2 are sets of similar configurations. This configuration, however, should not be construed as limiting the number of the light reception elements to be accommodated in one set. Another possible embodiment is that two light reception elements are accommodated in one set. The total number of the light reception elements in the light reception arrays PI1 and PI2 should not be limited to the example illustrated in FIG. 5 and other drawings. The light reception arrays PI1 and PI2 may acquire different-phase light reception signals.

The light reception arrays corresponding to the incremental patterns should not be limited to the configuration in which the two light reception arrays PI1 and PI2 are aligned with each other across the light source 131. Another possible embodiment is that the light reception arrays form a single light reception array in the measurement direction C on the outer peripheral side or the inner peripheral side of the light source 131. Still another possible embodiment is to form incremental patterns having mutually different resolutions on a plurality of tracks of the disk 110, and to provide a plurality of light reception arrays corresponding to the respective tracks.

The light reception arrays have been outlined in the above description. Next, the position data generator 140, which is the remaining element of the configuration, will be described. Then, shapes and other properties of the light reception elements of the light reception arrays PA1 and PA2 will be described.

2-3. Position Data Generator

The position data generator 140 acquires signals from the optical module 130 at the timing of measuring the absolute position of the motor M. The signals include two absolute signals each including a bit pattern representing a first absolute position, and high-incremental signals including four incremental signals that are phase-shifted relative to each other by 90°. Based on the signals, the position data generator 140 calculates a second absolute position of the motor M represented by the signals, and outputs position data indicating the calculated second absolute position to the controller CT.

There is no particular limitation to how the position data generator 140 should generate the position data; any of various other methods is possible. In this embodiment, the position data generator 140 generates the position data by calculating the absolute position based on the incremental signal and the absolute signal.

The position data generator 140 binarizes the absolute signals from the light reception arrays PA1 and PA2 and converts the binary representations into bit data that indicates the absolute position. Based on a predetermined relationship of correspondence between predetermined bit data and absolute positions, the position data generator 140 specifies the first absolute position. That is, the "first absolute position", as used herein, is an absolute position having a low resolution before superimposition of the incremental signals. Among the incremental signals of four phases from the light reception arrays PI1 and PI2, the position data generator 140 performs subtraction between the incremental signals having 180° phase difference. The subtraction between each pair of two incremental signals having 180° phase difference cancels out a production error, a measurement error, and other possible errors associated with the reflection slits in one pitch. The signals resulting from the subtraction will be referred to as "first incremental signal" and "second incremental signal". The first incremental signal and the second incremental signal have 90° phase difference in electrical angle with respect to each other (these signals will be simply referred to as "A-phase signal" and "B-phase signal"). Based on these two signals, the position data generator 140 identifies the position of the motor M in one pitch. There is no particular limitation to the method of identifying the position of the motor M in one pitch. An exemplary method in a case where the incremental signal (periodic signal) is a sinusoidal signal is to perform division between the two, A-phase and B-phase sinusoidal signals and to perform an arctan operation of the quotient so as to calculate electrical angle $\phi$. Another exemplary method is to convert the two sinusoidal signals into electrical angle $\phi$ using a tracking circuit. Still another exemplary method is to use a predetermined table from which to identify an electrical angle $\phi$ associated with the values of the A-phase and B-phase signals. In this respect, the position data generator 140 preferably performs analogue-digital conversion of the two, A-phase and B-phase sinusoidal signals in every detection signal.

The position data generator 140 superimposes the position in one pitch identified based on the incremental signals over the first absolute position identified based on the absolute signals. This ensures calculation of a second absolute position with a resolution higher than the resolution of the first absolute position, which is based on the absolute signals. Then, the position data generator 140 multiplies the calculated second absolute position to further improve the resolution so as to generate position data indicating a more highly accurate absolute position. Then, the position data generator 140 outputs the position data to the controller CT.

2-4. Shapes of Light Reception Elements of Absolute Light Reception Arrays

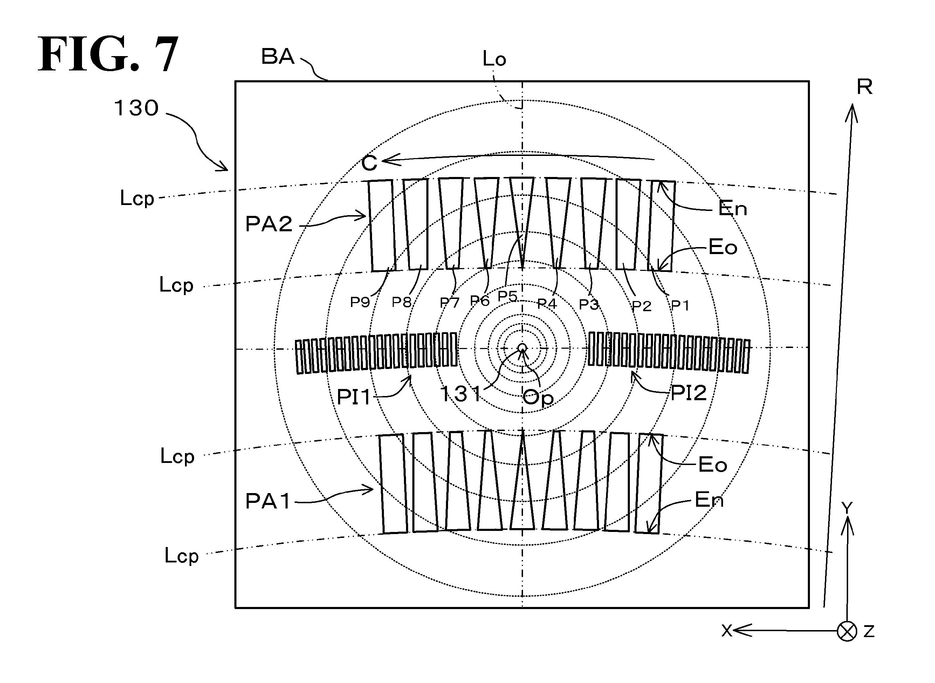

Next, shapes of the light reception elements of the light reception arrays PA1 and PA2 will be described.
Assume that diffused light emitted from the light source 131 is entirely reflected by the surface of the disk 110, and the substrate BA of the optical module 130 is irradiated with the reflected light. In this case, the intensity of the reflected light exhibits a concentric distribution as illustrated in FIG. 7. Specifically, the intensity attenuates as the distance from the optical center Op increases. The dotted circles in FIG. 7 indicate equi-intensity lines of the reflected light, among which inner peripheral circles indicate higher intensity and outer peripheral circles indicate lower intensity. This concentric distribution of intensity of the reflected light is because light has a property to attenuate in proportion to the optical path length while the reflected light from the light source 131 is received on the flat substrate BA, which is perpendicular to the optical axis in irradiation space (reflection space) of the diffused light. It is the areas on the substrate BA corresponding to the patterns SA1, SA2, and SI of the disk 110 that are actually irradiated with the reflected light.
As described above, in each of the absolute light reception arrays PA1 and PA2, the plurality of light reception elements are arranged along the arcuate lines Lcp, which have their center of curvature at the measurement center Os. The optical center Op is far from the measurement center Os. This configuration makes the light intensities of the light reception elements of the light reception arrays PA1 and PA2 vary in accordance with the distance from the light source 131 in the measurement direction C. Specifically, in the light reception array PA2, which has a line-symmetrical shape about the line Lo as described above, the light intensity in a light reception element P5, which is on the line Lo, is highest. The light intensity then decreases as the distance to the line Lo decreases, that is, the light intensity decreases in the order: the line-symmetrical pair of light reception elements P4 and P6, the line-symmetrical pair of light reception elements P3 and P7, the line-symmetrical pair of light reception elements P2 and P8, and the line-symmetrical pair of light reception elements P1 and P9. The same applies to the light reception array PA1. Since the light reception array PA1 and the light reception array PA2 are approximately parallel to each other across the light source 131, the light intensity in each light reception element in the light reception arrays PA1 and PA2 is at its highest at an edge Eo, which is on the light source 131 side, and the light intensity is at its lowest at an edge En, which is on the side opposite to the light source 131 side.

In this embodiment, each light reception element is a photodiode, and outputs a detection signal of an analog value that depends on the amount of light reception on the overall light reception area of the light reception element, as described above. The amount of light reception is a sum of light intensities at light reception points in the light reception area. If the light intensity is distributed differently in each of the light reception elements, the amount of light reception differs between the light reception elements, even though the light reception elements have identical light reception areas. This may cause analog detection signals to have varied change properties in the light reception elements. This, in turn, may cause the light reception elements to have mutually different timings for change into binarization signals, creating a possibility of erroneous detection of the absolute position. In order to prevent the light reception elements from having mutually different timings for change into the binarization signals, it is possible to provide suitable thresholds for conversion into the binarization signals in accordance with the change properties of the light reception elements. This, however, may complicate the circuit configuration or complicate signal processing, causing an increase in cost, for example.
It is also possible to optimize the external dimensions of the light reception elements in the measurement direction C and in the width direction R so as to vary the light reception areas and thus make the amounts of light reception uniform. Changing the external dimensions of the light reception elements in the measurement direction C, however, may cause non-uniform intervals between two adjacent light reception elements. This, in turn, may cause a non-uniform amount of crosstalk, which is the amount of leakage of light to and from the adjacent light reception elements and which is caused under the influence of diffused reflection, for example. As a result, the amounts of light reception may become non-uniform. Changing the external dimensions of the light reception elements in the width direction R may cause light reception elements having smaller width dimensions to be more likely affected by width displacement of the reflected light caused by eccentricity of the disk 110. This may cause a possibility of detection errors.
In view of the above-described circumstances, in this embodiment, in each of the light reception array PA1 and the light reception array PA2, the light reception elements have identical maximum external dimensions in the measurement direction C and identical maximum external dimensions in the width direction R. Also, the light reception elements at different distances from the light source 131 have mutually different shapes so as to make the light reception elements the same in the amount of light reception. The terms "same" and "identical" as used for the external dimensions of the light reception elements and for the amounts of light reception may not necessarily be intended to mean "same" or "identical" in a strict sense, but are intended to mean "approximately same" and "approximately identical", allowing design-related and production-related tolerance and error to occur. Also as used herein, the "amount of light reception" means the maximum amount of reflected light that each light reception element receives on its entire light reception area.

In this embodiment, in the light reception arrays PA1 and PA2, some or all of the plurality of light reception elements have their edges Eg on both sides of each light reception element in the measurement direction inclined relative to the width direction R. There is no particular limitation to how the edges Eg should be inclined. In this embodiment, some or all of the light reception elements each have a triangular or trapezoidal shape. Among the light reception arrays PA1 and PA2, the light reception array PA2 will be taken as an example and described in more detail. The light reception array PA1 has a similar shape to the shape of the light reception array PA2 except that the light reception array PA1 forms a symmetry with the light reception array PA2 in the width direction R. In view of this, the shape of the light reception array PA1 will not be elaborated here.

2-4-1. Details of Shapes of Light Reception Elements

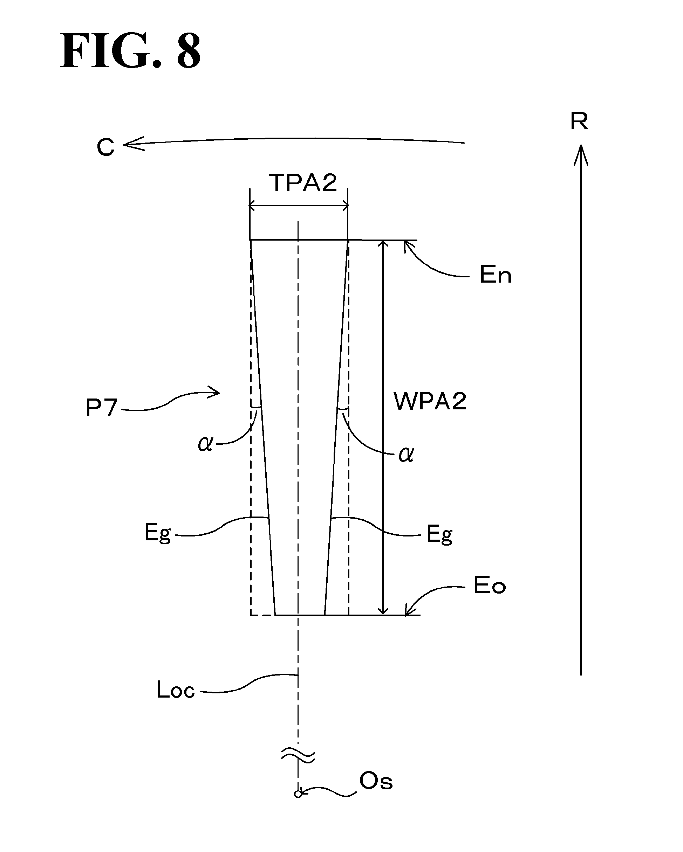

FIG. 8 is an enlarged view of an exemplary shape of a light reception element P7, which is one of the nine light reception elements of the light reception array PA2. By referring to FIG. 8, description will be made with regard to how to set the shapes and dimensions of portions of a light reception element that has inclined edges Eg relative to the width direction R on both sides of the light reception element in the measurement direction.

Schematically, the shape of the light reception element P7 is based on a quadrilateral shape with trimmed corners. The base quadrilateral shape is a rectangle having a dimension $TPA2$ in the measurement direction C and a dimension $WPA2$ in the width direction R. The dimension $TPA2$, in this example, is a length that is $\varepsilon$ times the minimum length P (basic bit length) of the reflection slit of the pattern SA2 in the measurement direction C. As illustrated in FIG. 5, all of the light reception elements P1 to P9 of the light reception array PA2 have this base rectangular shape in common. That is, all of the light reception elements P1 to P9 have in common the maximum external dimension $TPA2$ in the measurement direction C and the maximum external dimension $WPA2$ in the width direction R. Two opposite sides of the base quadrilateral shape may not necessarily be parallel to each other in a strict sense, and the corners of the base quadrilateral shape may not necessarily have a right angle in a strict sense, either. That is, the base rectangular shape may be approximately quadrilateral.

As used herein, "trim", "trimming", and "trimmed" refer to an act of cutting away corners of the quadrilateral shape at predetermined inclination angles, or a state in which corners of the quadrilateral shape are cut away at predetermined inclination angles, with the result that the edges Eg of the quadrilateral shape on its both sides in the measurement direction are inclined relative to the width direction R. At least one of edges En and Eo of the light reception element in the width direction R is trimmed on two corners at identical inclination angles $\alpha$. Thus, the light reception element has a triangular shape with a vertex on the edge En or Eo or has a trapezoidal shape with one side on the edge En or Eo. In the case of the light reception element P7 illustrated in FIG. 8, the two corners of the edge Eo, which is on the light source 131 side, are trimmed. In this shape as well, the maximum external dimension in the width direction R is maintained at the dimension $WPA2$. Thus, the light reception element P7 has an approximately isosceles trapezoidal shape that is symmetrical in the measurement direction C about a line Loc, which passes through the measurement center Os and the center of the light reception element. It is noted that the light reception element P5, which is at the center of the light reception array PA2, has an approximately isosceles triangular shape that is symmetrical in the measurement direction C about the line Loc.

As the inclination angles $\alpha$ of the edges Eg of the light reception element relative to the width direction R become wider, the light reception area of the light reception element becomes smaller. When the light reception elements have identical inclination angles $\alpha$, the light reception elements have identical light reception areas.

The light reception element having the edges Eg inclined relative to the width direction R may be formed by a method other than trimming corners of the base quadrilateral shape.

In the following description, the light reception elements having corners trimmed in the above-described manner, that is, the light reception elements with inclined edges Eg relative to the width direction R on both sides of each light reception element in the measurement direction (namely, the light reception elements P2 to P8 in this embodiment), will be occasionally referred to as "first light reception elements". The light reception elements without corners trimmed in the above-described manner, that is, the light reception elements with mutually parallel edges Eg in the width direction R on both sides of each light reception element in the measurement direction (namely, the light reception elements P1 and

P9 in this embodiment), will be occasionally referred to as "second light reception elements".

As described above by referring to FIG. 7, among the plurality of light reception elements P1 to P9 of the light reception array PA2, a light reception element closer to the line Lo, that is, closer to the light source 131 on the substrate BA, has higher light intensity, whereas a light reception element farther from the line Lo, that is, farther from the light source 131 on the substrate BA, has lower light intensity. Thus, in this embodiment, the two light reception elements P1 and P9, which are at the farthest positions from the light source 131, are the second light reception elements, which have the largest light reception areas. The other light reception elements P2 to P8 are the first light reception elements. The shapes of the light reception elements are determined based on the amounts of light reception at the light reception elements P1 and P9 so as to make all of the light reception elements have identical amounts of light reception.

With this configuration, the plurality of light reception elements P1 to P9 of the light reception array PA2 have the exemplary shapes illustrated in FIGs. 5 and 7. Specifically, the two outermost light reception elements P1 and P9 are second light reception elements having quadrilateral shapes without trimmed portions. The light reception elements P1 and P9 are approximately rectangular light reception elements that are symmetrical in the measurement direction C.

The seven light reception elements P2 to P8 on the inner side of the light reception elements P1 and P9 are trimmed first light reception elements. Each of the light reception elements P2 to P8 has a shape that is symmetrical in the measurement direction C. The edges Eg of each of the light reception elements P2 to P8 on both sides of each light reception element in the measurement direction are inclined at the predetermined inclination angle $\alpha$ in the width direction R to make the light reception elements P2 to P8 have identical amounts of light reception. In other words, the inclination angle $\alpha$ becomes larger as the light reception element is closer to the light source 131 in the measurement direction C.

Specifically, the pair of light reception elements P2 and P8, which are respectively on the inner side of and immediately next to the pair of outermost light reception elements P1 and P9, are first light reception elements each having an approximately isosceles trapezoidal shape with edges Eg inclined at a relatively small inclination angle $\alpha$. The pair of light reception elements P3 and P7, which are respectively on the inner side of and immediately next to the pair of light reception elements P2 and P8, are first light reception elements each having an approximately isosceles trapezoidal shape with edges Eg inclined at an inclination angle $\alpha$ that is larger than the inclination angle $\alpha$ in the light reception elements P2 and P8. The pair of light reception elements P4 and P6, which are respectively on the inner side of and immediately next to the pair of light reception elements P3 and P7, are first light reception elements each having an approximately isosceles trapezoidal shape with edges Eg inclined at an inclination angle $\alpha$ that is larger than the inclination angle $\alpha$ in the light reception elements P3 and P7. The light reception element P5, which is on the inner side of the pair of light reception elements P4 and P6 and closest to the light source 131, is a first light reception element having an approximately isosceles triangular shape with edges Eg inclined at an inclination angle $\alpha$ that is larger than the inclination angle $\alpha$ in the light reception elements P4 and P6.

With this configuration, the plurality of light reception elements P1 to P9 have different light reception areas. Specifically, the center light reception element P5, which is closest to the light source 131, has the smallest light reception area. The light reception elements P4 and P6 have light reception areas larger than the light reception area of the light reception element P5. The light reception elements P3 and P7 have light reception areas larger than the light reception areas of the light reception elements P4 and P6. The light reception elements P2 and P8 have light reception areas larger than the light reception areas of the light reception elements P3 and P7. The outermost light reception elements P1 and P9 have the largest light reception areas.

The plurality of light reception elements P1 to P9 of the light reception array PA2 should not be limited to the above-described shapes. Another possible embodiment is that the light reception elements P1 and P9, which are at both ends of the light reception array PA2, are also the first light reception elements having the edges Eg inclined relative to the width direction R. Still another possible embodiment is that each of the light reception elements has a shape asymmetrical in the measurement direction C. The light reception elements P2 to P8 should not be limited to the above-described relationship of how the inclination angles $\alpha$ differ. The light reception elements may have different maximum external dimensions in the measurement direction C and different maximum external dimensions in the width direction R. In this embodiment, the light reception elements P1 to P9 have the above-described shapes, for convenience of description.

The configuration described so far ensures that in each of the light reception arrays PA1 and PA2, the light reception elements have identical maximum external dimensions in the measurement direction C and identical maximum external dimensions in the width direction R, while at the same time, the light reception elements have identical amounts of light reception.

Providing the first light reception elements with the edges Eg inclined relative to the width direction R provides additional advantageous effects in converting the detection signals into binarization signals. The additional advantageous effects will be described in detail below.

2-4-2. Effects of Shapes with Inclined Edges in Binarization Signal Conversion

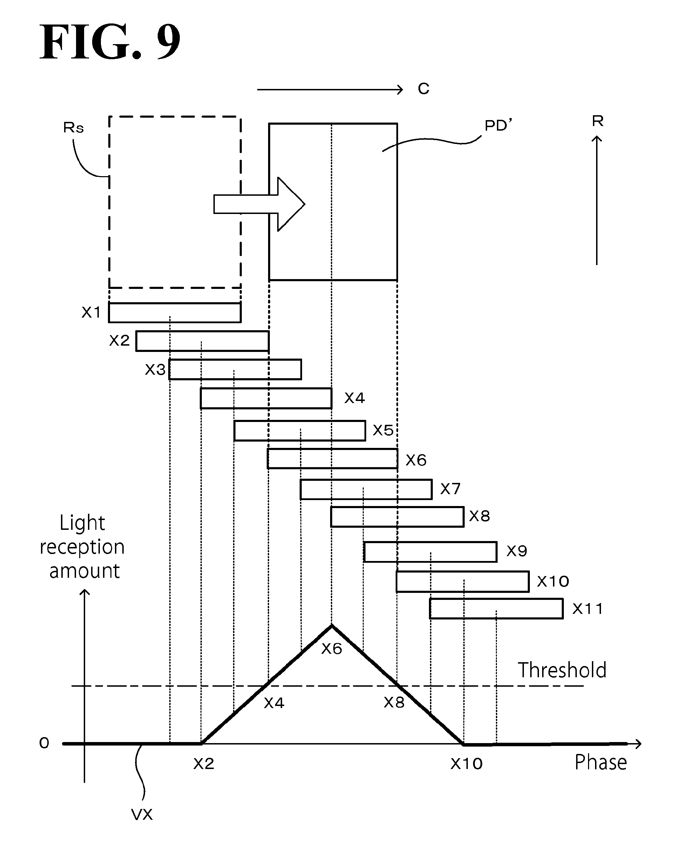

Description will be first made with regard to a comparative example by referring to FIG. 9, which illustrates a change property of an analog detection signal in the case of a light reception element PD' according to the comparative example, which has a rectangular shape without edges Eg inclined relative to the width direction R. Referring to FIG. 9, Rs denotes an irradiation surface of light reflected from the reflection slits of the patterns SA1 and SA2. As the disk 110 rotates, the phase of the rotation position of the disk 110 changes. In accordance with the change, the irradiation surface Rs moves relative to the rectangular light reception element PD' in the measurement direction C, passing through positions X1 to X11 in this order. Assume that the irradiation surface Rs has a rectangular shape that is larger than the light reception element PD' in the width direction R and that has the same dimension as the light reception element PD' in the measurement direction C. Also, assume that the light intensity is distributed uniformly over the irradiation surface Rs. While the irradiation surface Rs is passing through positions X1 to X11, the amount of light reception at the light reception element PD' changes over time in accordance with the change property indicated by the bold line VX.

In this case, from the timing at which the irradiation surface Rs is at position X2 and starts overlapping the light reception element PD' to the timing at which the irradiation surface Rs is at position X6 and completely overlaps the light reception element PD', the amount of light reception monotonously increases in a linear function manner. From the timing at which the irradiation surface Rs is at position X6 and the amount of light reception is at its maximum to the timing at which the irradiation surface Rs is at position X10 and stops overlapping the light reception element PD', the amount of light reception monotonously decreases in a linear function manner.

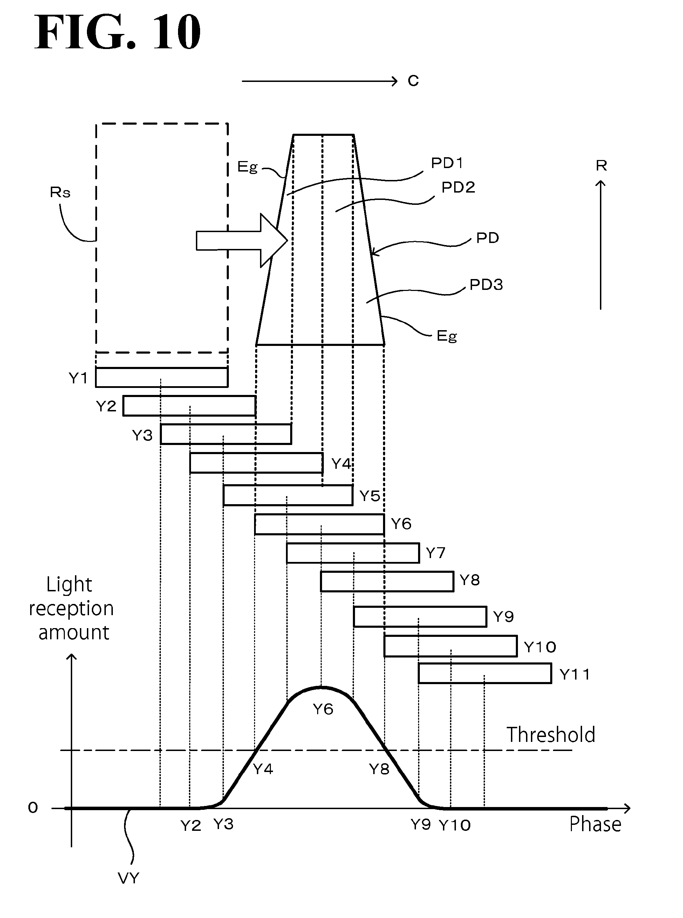

FIG. 10 illustrates a change property of an analog detection signal in the case of a light reception element PD according to this embodiment, which has edges Eg inclined relative to the width direction R. The light reception element PD illustrated in FIG. 10 has an isosceles trapezoidal shape. Similarly to the above-described comparative example, the irradiation surface Rs has a rectangular shape that is larger than the light reception element PD in the width direction R and has the same dimension as the light reception element PD in the measurement direction C. Also similarly to the comparative example, the light intensity is distributed uniformly over the irradiation surface Rs. For convenience of description, three areas are defined in the light reception element PD, namely, a triangular area PD1, a rectangular area PD2, and a triangular area PD3. As the disk 110 rotates, the phase of the rotation position of the disk 110 changes. In accordance with the change, the irradiation surface Rs moves relative to the light reception element PD, passing through positions Y1 to Y11 in this order. While the irradiation surface Rs is passing through positions Y1 to Y11, the amount of light reception at the light reception element PD changes over time in accordance with the change property indicated by the bold line VY.

In this case, from the timing at which the irradiation surface Rs is at position Y2 and starts overlapping the triangular area PD1 of the light reception element PD to the timing at which the irradiation surface Rs is at position Y3 and starts overlapping the rectangular area PD2, the amount of light reception increases in a quadratic function manner (forming a downward curve). From the timing of position Y3 to the timing at which the irradiation surface Rs is at position Y5 and starts overlapping the triangular area PD3 (that is, in the period over which the irradiation surface Rs overlaps the rectangular area PD2), the amount of light reception monotonously increases in a linear function manner. In this period, at the timing at which the irradiation surface Rs is at position Y4 and overlaps half the rectangular area PD2, the amount of light reception becomes half the maximum amount of light reception. From the timing of position Y5 to the timing at which the irradiation surface Rs is at position Y6 and completely overlaps the light reception element PD (all of the triangular area PD1, the rectangular area PD2, and the triangular area PD3) (that is, in the period over which the irradiation surface Rs overlaps the triangular area PD3), the amount of light reception increases in a quadratic function manner (forming an upward curve). At the timing of position Y6, the amount of light reception is at its maximum.

From the timing of position Y6 to the timing at which the irradiation surface Rs is at position Y7 and stops overlapping the triangular area PD1, the amount of light reception decreases in a quadratic function manner (forming an upward curve). From the timing of position Y7 to the timing at which the irradiation surface Rs is at position Y9 and stops overlapping the rectangular area PD2, the amount of light reception monotonously decreases in a linear function manner. In this period, at the timing at which the irradiation surface Rs is at position Y8 and stops overlapping half the rectangular area PD2, the amount of light reception becomes half the maximum amount of light reception. From the timing at which the irradiation surface Rs is at position Y9 and stops overlapping the rectangular area PD2 to the timing at which the irradiation surface Rs is at position Y10 and stops overlapping the triangular area PD3 (that is, the irradiation surface Rs stops overlapping the light reception element PD), the amount of light reception decreases in a quadratic function manner (forming a downward curve).

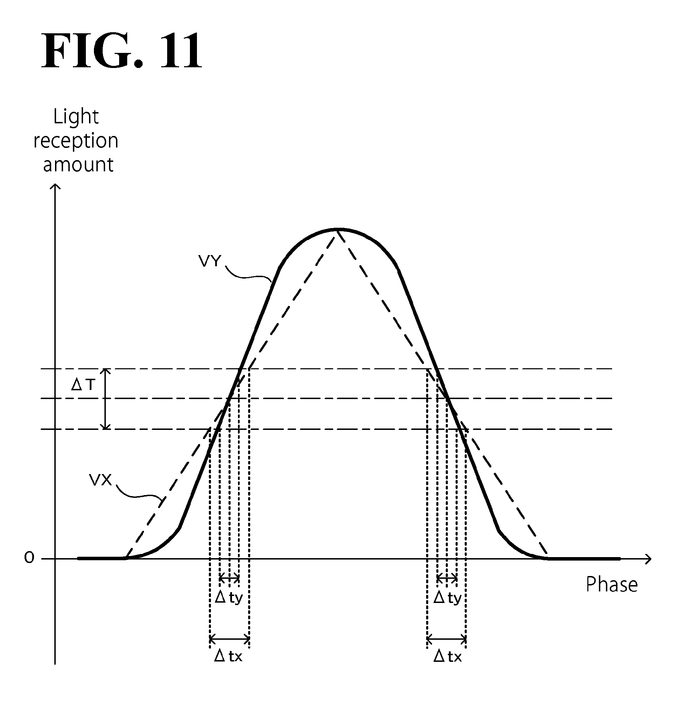

By referring to FIG. 11, the change property of the amount of light received by the light reception element PD' will be compared with the change property of the amount of light received by the light reception element PD. To clarify the comparison, FIG. 11 will be under the assumption that the light reception element PD' and the light reception element PD have identical light reception areas, are irradiated with a uniform distribution of light having the same intensity, and have the same maximum amounts of light reception in the respective change properties.

As illustrated in FIG. 11, in both the light reception elements PD' and PD, the timing at which the amount of light reception is half the maximum amount of light reception is the timing at which half of the light reception area of each light reception element overlaps the irradiation surface Rs, namely, the timings represented by positions X4 and X8 in FIG. 9 and Y4 and Y8 in FIG. 10. At these timings, the characteristic curves VX and VY intersect each other. Preferably, the threshold for converting analog detection signals from the light reception elements into binarization signals is set at a value that is half the maximum amount of light reception. The threshold, however, may change relative to the change property of the amount of light reception due to a change in the intensity of irradiation light caused by deterioration over time of the light source 131 or a production-related individual difference that the light source 131 has, or due to a change in the light reception sensitivity caused by deterioration over time of the light reception elements or a production-related individual difference that each light reception element has. The threshold changes within a range of fluctuation $\Delta T$, which is based on a reference value that is half of the maximum amount of light reception. In the case of the light reception element PD', however, since the change property increases and decreases in a linear function manner, the timing of change into a binarization signal changes within a corresponding fluctuation range $\Delta tx$.

In contrast, in the case of the light reception element PD, the linear-function section of the amount of light reception between position Y3 and position Y5 of the irradiation surface Rs (between position Y7 and position Y9) exhibits a shaper inclination angle than the equivalent linear-function section in the case of the light reception element PD'. This configuration keeps the fluctuation of the change timing of the binarization signal within a fluctuation range $\Delta ty$ with respect to the fluctuation range $\Delta T$ of the threshold. The fluctuation range $\Delta ty$ is much narrower than the fluctuation range $\Delta tx$, which is the case of the light reception element PD'. Thus, by forming the first light reception elements according to this embodiment in isosceles trapezoidal shapes or isosceles triangular shapes, the influence of the threshold change is eliminated or minimized during the conversion of the analog detection signals into the binarization signals.

Forming the light reception area in an isosceles triangular shape, as in the light reception element P5, provides similar advantageous effects to the above-described advantageous effects. Specifically, the change property of the analog detection signal in this case has no linear-function section, and the timings at which the amount of light reception is half the maximum amount of light reception are inflection points of the characteristic curve. In the vicinity of the inflection points, the characteristic curve exhibits sharp inclinations. This configuration minimizes the fluctuation of the change timing of the binarization signal.

3. Advantageous Effects of this Embodiment

As has been described heretofore, in this embodiment, the encoder 100 includes the patterns SA1 and SA2, the light source 131, and the plurality of light reception elements (P1 to P9 in the embodiment illustrated in FIG. 5 and other drawings). The patterns SA1 and SA2 are disposed in the measurement direction C. The light source 131 emits light to the patterns SA1 and SA2. The plurality of light reception elements are disposed in the measurement direction C and receive the light emitted from the light source 131 and reflected by the patterns SA1 and SA2. The plurality of light reception elements include the first light reception elements (P2 to P8 in the embodiment illustrated in FIG. 5 and other drawings). The edges Eg, which are in the measurement direction C, of each of the first light reception elements are inclined relative to the width direction R, which is perpendicular to the measurement direction C. This configuration provides the following advantageous effects.

That is, by adjusting the inclination angles $\alpha$ of the edges Eg of the light reception elements, the light reception areas of the first light reception elements P2 to P8 are varied.

In this manner, the amounts of light reception of the first light reception elements P2 to P8 are adjusted. Since this configuration uniformizes the amounts of light received by the light reception elements P1 to P9, detection accuracy is uniformized on a one-bit basis. This, in turn, eliminates or minimizes erroneous detection of the absolute position, thereby improving detection accuracy. The above configuration also eliminates the need for processing for adjusting the signal output of the light reception elements P1 to P9. The above configuration also ensures use of a common threshold among the light reception elements P1 to P9 in the conversion of the analog signals from the light reception elements P1 to P9 into binarization signals. This configuration simplifies the circuit configuration.

In the case of the second light reception elements P1 and P9, whose edges Eg are not inclined, the signal output during the passing of the patterns SA1 and SA2 monotonously increases or decreases in a linear function manner. In the case of the first light reception elements P2 to P8, which have inclined edges Eg relative to the width direction R in the measurement direction C, the change in signal output during the passing of the patterns SA1 and SA2 includes quadratically increasing sections and quadratically decreasing sections. This configuration ensures an increased rate (that is, a steeper inclination) of change in signal output in the vicinity of the threshold. This configuration minimizes phase deviation with respect to the change of the threshold, thereby preventing erroneous detection of the absolute position even if the threshold changes.

In this embodiment, the first light reception elements P2 to P8 each have a shape symmetrical in the measurement direction C. This configuration ensures that even if the measurement direction C is reversed, the accuracy in detecting the absolute position remains approximately the same. This configuration ensures more highly accurate detection of the absolute position irrespective of the rotation direction of the motor.

In this embodiment, the inclination angles $\alpha$ of the edges Eg relative to the width direction R are set to equalize the amounts of light received by the plurality of first light reception elements P2 to P8. This configuration improves detection accuracy and enhances robustness with respect to changes in the threshold.

In this embodiment, the inclination angles $\alpha$ of the edges Eg of the plurality of first light reception elements P2 to P8 relative to the width direction R increase as the plurality of first light reception elements P2 to P8 are closer to the light source 131 in the measurement direction C. This configuration provides the following advantageous effects. Since light attenuates in proportion to its optical path length, the intensity of the light emitted from the light source 131 exhibits a concentric distribution around the light source 131, that is, the light intensity attenuates as the distance from the light source 131 increases. In this light intensity distribution, as the first light reception element is closer to the light source 131, the edges Eg of the first light reception element are inclined by larger angles relative to the width direction R. This configuration ensures that a sufficient light reception area is secured for a first light reception element that is far from the light source 131, while a smaller light reception area is set for a first light reception element that is closer to the light source 131. This configuration uniformizes the amounts of light received by the light reception elements P2 to P8.

In this embodiment, the plurality of light reception elements P1 to P9 have identical maximum external dimensions, *TPA2,* in the measurement direction C, and the plurality of light reception elements P1 to P9 have identical maximum external dimensions, *WPA2,* in the width direction R. This configuration provides the following advantageous effects.

By equalizing the maximum external dimensions, *TPA2,* of the light reception elements P1 to P9 in the measurement direction C, the intervals between the light reception elements P1 to P9 in the measurement direction C are approximately uniformized. This configuration uniformizes the amount of crosstalk between adjacent light reception elements in the measurement direction C, thereby further improving uniformity of the amounts of light received by the light reception elements P1 to P9. This configuration also facilitates processing for removing crosstalk noise from the signals of the light reception elements P1 to P9.

If the dimension of a light reception element in the width direction R should be decreased as the distance to the light source 131 decreases, the light reception element having a smaller dimension in the width direction R would be more likely affected by a position deviation of light in the width direction R caused by eccentricity of the disk 110. This may make erroneous detection more likely to occur. In view of this, the maximum external dimensions *WPA2* of the light reception elements P1 to P9 in the width direction R are equal to each other. This configuration eliminates or minimizes the influence that the eccentricity of the disk 110 has. This, in turn, eliminates or minimizes erroneous detection of the absolute position even though the disk 110 has eccentricity.

In this embodiment, the two second light reception elements P1 and P9 are outermost light reception elements of the plurality of light reception elements P1 to P9. The two second light reception elements P1 and P9 have edges Eg in the measurement direction C parallel to each other in the width direction R. This configuration provides the following advantageous effects.

The second light reception elements P1 and P9 have non-inclined edges Eg on both sides of each light reception element in the measurement direction, and have larger light reception areas than the light reception areas of the first light reception elements P2 to P8, which have inclined edges Eg. In view of this, the outermost light reception elements P1 and P9, which are farthest from the light source 131, serve as second light reception elements, and the first light reception elements P2 to P8 are disposed between the second light reception elements P1 and P9. This configuration maximizes the total amount of light reception of the plurality of light reception elements P1 to P9, and also uniformizes the amounts of light reception of the light reception elements P1 to P9.

In this embodiment, the first light reception elements P2 to P8 are each formed by trimming the corners on the light source 131 side of the quadrilateral shape of each of the second light reception elements P1 and P9. This configuration provides the following advantageous effects.

The first light reception elements P2 to P8 are each based on the quadrilateral shape of each of the second light reception elements P1 and P9, and adjusted as to which area(s) to be trimmed away. This facilitates the design of the shapes of the first light reception elements P2 to P8. It is the corners of the quadrilateral shape on the light source 131 side that are trimmed. This configuration minimizes the influence of noise caused by diffused light or stray light (for example, diffused light caused by a bonding wire of the LED).

In this embodiment, one set of light reception elements constituting the light reception array PA1 and another set of light reception elements constituting the light reception array PA2 are parallel to each other and offset from each other across the light source 131 in the width direction R. This configuration provides the following advantageous effects. It is possible for one of the two sets of the plurality of light reception elements (light reception array PA2) to be a change point of the absolute patterns. This and other situations may cause degraded reliability of the detection signals. In this case, the detection signals from the other set of the plurality of light reception elements (light reception array PA1) may be used. The same applies the other way around; that is, when the light reception array PA1 is a change point of the absolute patterns, the detection signals from the other light reception array PA2 may be used. This improves the reliability of the detection signals from the light reception elements, thereby improving detection accuracy of the absolute position.

In this embodiment, the encoder 100 is a reflection encoder in which the light source 131 is a point light source to emit diffused light to the patterns SA1 and SA2. The patterns SA1 and SA2 reflect the light emitted from the light source 131, and the plurality of light reception elements of the light reception arrays PA1 and PA2 receive the light reflected by the patterns SA1 and SA2. This configuration provides the following advantageous effects.

In the reflection encoder, use of a point light source to emit diffused light makes the distribution of the amount of the reflected light from each of the patterns SA1 and SA2 more likely to form a trapezoidal shape that expands beyond the irradiation area corresponding to the patterns SA1 and SA2. This may readily induce crosstalk between the light reception elements that are adjacent to each other in the measurement direction C. In view of this, this embodiment uniformizes the amount of crosstalk between adjacent light reception elements, and this configuration is effective when applied to reflection encoders. Additionally, use of a reflection encoder reduces the size of the encoder 100 in that the plurality of light reception elements P1 to P9 of the light reception arrays PA1 and PA2 can be arranged closer to the light source 131.

4. Modifications

Embodiments have been described in detail hereinbefore with reference to the accompanying drawings. Obviously, numerous modifications and variations of the present disclosure are possible in light of the above teachings. It is therefore to be understood that within the scope of the appended claims, the present disclosure may be practiced otherwise than as specifically described herein. Modifications will now be described, wherein like reference numerals designate corresponding or identical elements throughout the embodiments and the modifications.

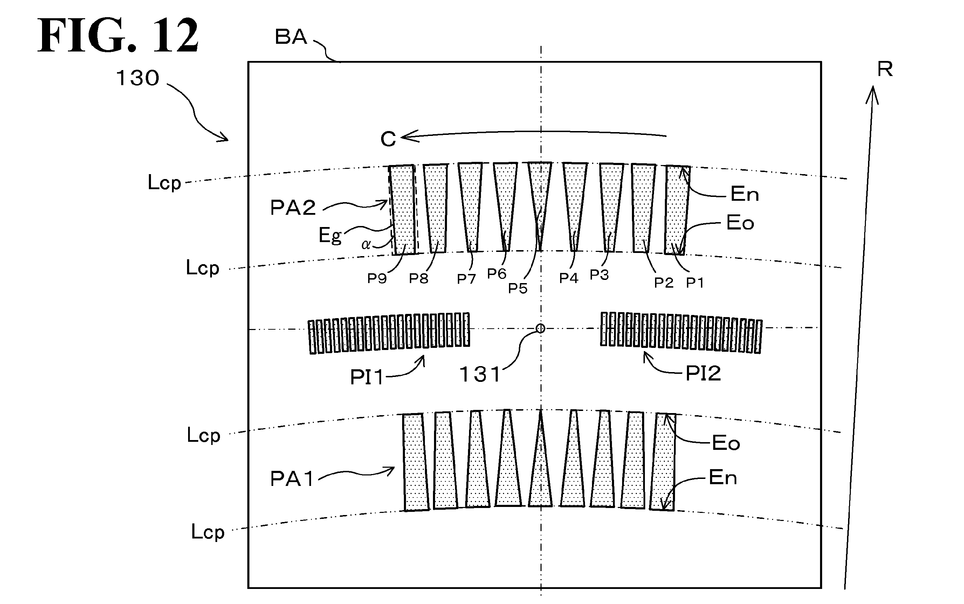

The light reception elements of the light reception arrays PA1 and PA2 should not be limited to the shapes according to the above-described embodiment. Various other shapes may be contemplated. By referring to FIGs. 12 to 14, variations of the shapes of the light reception elements will be described below.

4-1. The Case where First Light Reception Elements are also Disposed at Outermost Positions in Measurement Direction

In the above-described embodiment, the outermost light reception elements P1 and P9 in the measurement direction serve as approximately rectangular, second light reception elements. This configuration, however, should not be construed in a limiting sense. The light reception elements P1 and P9 may serve as first light reception elements. An exemplary modification is illustrated in FIG. 12. Identical components illustrated in FIGs. 5 and 12 will be denoted with the same reference numerals and will not be elaborated here.

As illustrated in FIG. 12, all of the light reception elements P1 to P9 of the light reception array PA2 according to this modification are first light reception elements, whose edges Eg on both sides in the measurement direction are inclined relative to the width direction R. These light reception elements P1 to P9 each have a shape symmetrical in the measurement direction C. The inclination angles $\alpha$ in the width direction R of the both side edges Eg in the measurement direction are set to equalize the amounts of light reception of the light reception elements P1 to P9. Specifically, the inclination angles $\alpha$ are set to be larger as the light reception element are closer to the light source 131 in the measurement direction C. The light reception array PA1 has a similar configuration of its light reception elements to the configuration of the light reception elements of the light reception array PA2.

In this modification as well, among the plurality of light reception elements P1 to P9, a light reception element closer to the light source 131 has a smaller light reception area, and a light reception element farther from the light source 131 has a larger light reception area. Since this configuration uniformizes the amounts of light received by the light reception elements P1 to P9, detection accuracy is uniformized on a one-bit basis. This, in turn, eliminates or minimizes erroneous detection of the absolute position. Thus, this modification provides similar advantageous effects to the advantageous effects provided in the above-described embodiment.

4-2. The Case where Center Light Reception Element in Arrangement Direction has

Isosceles Trapezoidal Shape

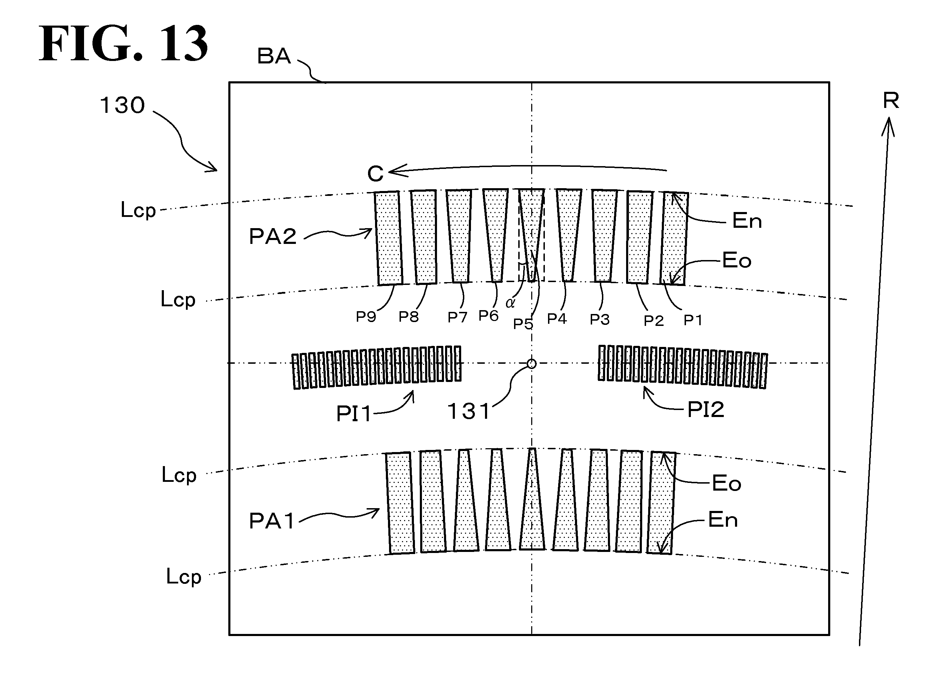

In the above-described embodiment, the light reception element P5, which is at the center of each of the light reception arrays PA1 and PA2, has an isosceles triangular shape. This configuration, however, should not be construed in a limiting sense. The light reception element P5 may have an isosceles trapezoidal shape. An exemplary modification is illustrated in FIG. 13. Identical components illustrated in FIGs. 5 and 13 will be denoted with the same reference numerals and will not be elaborated here.

As illustrated in FIG. 13, in this modification, in the light reception array PA2, the center light reception element P5, which is closest to the light source 131 in the measurement direction C, has an isosceles trapezoidal shape. The outermost light reception elements P1 and P9 in the measurement direction are second light reception elements, which have approximately rectangular shapes. The light reception elements P1 to P9 each have a shape symmetrical in the measurement direction C. The light reception elements P2 to P8 are first light reception elements, whose both side edges Eg in the measurement direction are inclined. The inclination angles $\alpha$ of the edges Eg in the width direction R are set to equalize the amounts of light reception of the light reception elements P2 to P8. That is, the inclination angles $\alpha$ are set to be larger as the light reception elements are closer to the light source 131 in the measurement direction C. The light reception array PA1 has a similar configuration of its light reception elements to the configuration of the light reception elements of the light reception array PA2.

In this modification as well, among the plurality of light reception elements P1 to P9, a light reception element closer to the light source 131 has a smaller light reception area, and a light reception element farther from the light source 131 has a larger light reception area. Since this configuration uniformizes the amounts of light received by the light reception elements P1 to P9, detection accuracy is uniformized on a one-bit basis. This, in turn, eliminates or minimizes erroneous detection of the absolute position. Thus, this modification provides similar advantageous effects to the advantageous effects provided in the above-described embodiment.

4-3. The Case of Trimming Corners of Plurality of Light Reception Elements on Side opposite to Light Source Side

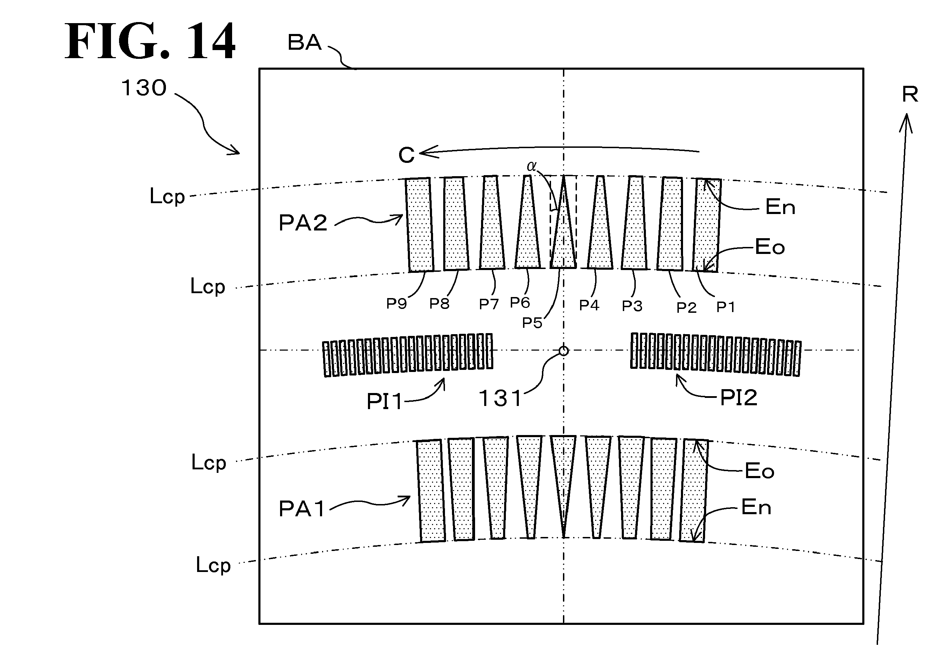

In the above-described embodiment, the light reception elements excluding the outermost light reception elements P1 and P9 in the measurement direction, namely, the plurality of light reception elements P2 to P8 are each formed by trimming the corners of the base quadrilateral shape on the edge Eo, which is on the light source 131 side. Thus, the both side edges Eg in the measurement direction are inclined. The edges Eg, however, may be inclined by trimming corners of the base quadrilateral shape on the edge En, which is on the side opposite to the light source 131 side. An exemplary modification is illustrated in FIG. 14. Identical components illustrated in FIGs. 5 and 14 will be denoted with the same reference numerals and will not be elaborated here.

As illustrated in FIG. 14, in this modification, in the light reception array PA2, the plurality of light reception elements P2 to P8 are each formed by trimming the corners of the base quadrilateral shape on the edge En, which is on the side opposite to the light source 131 side. Thus, the both side edges Eg in the measurement direction are inclined relative to the width direction R. This modification is otherwise similar in configuration to the above-described embodiment.

In this modification as well, among the plurality of light reception elements P1 to P9, a light reception element closer to the light source 131 has a smaller light reception area, and a light reception element farther from the light source 131 has a larger light reception area. Since this configuration uniformizes the amounts of light received by the light reception elements P1 to P9, detection accuracy is uniformized on a one-bit basis. This, in turn, eliminates or minimizes erroneous detection of the absolute position. Thus, this modification provides similar advantageous effects to the advantageous effects provided in the above-described embodiment.

As used herein, the terms "perpendicular", "parallel", and "plane" may not necessarily mean "perpendicular", "parallel", and "plane", respectively, in a strict sense. Specifically, the terms "perpendicular", "parallel", and "plane" mean "approximately perpendicular", "approximately parallel", and "approximately plane", respectively, taking design-related and production-related tolerance and error into consideration.

Also, when the terms "same", "identical", "equal", and "different" are used in the context of dimensions or sizes of external appearance, these terms may not necessarily mean "same", "identical", "equal", and "different", respectively, in a strict sense. Specifically, the terms "same", "identical", "equal", and "different" mean "approximately same", "approximately identical", "approximately equal", and "approximately different", respectively, taking design-related and production-related tolerance and error into consideration.

| | |
|---|---|
| 100 | Encoder |
| 131 | Light source (example of the point light source) |
| C | Measurement direction |
| Eg | Edge |
| M | Motor |
| P1, P9 | Light reception element (first light reception element, second light reception element) |
| P2 to P8 | Light reception element (first light reception element) |
| R | Width direction |
| SA1, SA2 | Pattern (example of the absolute pattern) |
| SM | Servomotor (example of the motor with the encoder) |
| *TPA2* | Maximum external dimension in measurement direction |
| *WPA1*, *WPA2* | Maximum external dimension in width direction |
| $\alpha$ | Inclination angle |

## Claims

1. An encoder (100), **characterized by**:

   an absolute pattern (SA1, SA2) disposed in a measurement direction;
   a light source (131) configured to emit light to the absolute pattern (SA1, SA2); and
   a plurality of light reception elements (P1 to P9) arranged in the measurement direction and configured to receive the light emitted from the light source (131) and transmitted through or reflected by the absolute pattern (SA1, SA2), the plurality of light reception elements (P1 to P9) comprising at least one first light reception element (P2 to P8) comprising an edge (Eg) in the measurement direction, the edge (Eg) being inclined relative to a width direction perpendicular to the measurement direction.

2. The encoder (100) according to claim 1, wherein the at least one first light reception element (P2 to P8) comprises a shape symmetrical in the measurement direction.

3. The encoder (100) according to claim 1 or 2, wherein the edge (Eg) is inclined in the width direction by an angle at which the plurality of light reception elements (P1 to P9) receive equal amounts of the light.

4. The encoder (100) according to claim 3, wherein the at least one first light reception element comprises a plurality of first light reception elements (P2 to P8), and
   wherein edges (Eg) of the plurality of first light reception elements (P2 to P8) are inclined relative to the width direction by angles that increase as the plurality of first light reception elements (P2 to P8) are closer to the light source (131) in the measurement direction.

5. The encoder (100) according to any one of claims 1 to 4, wherein the plurality of light reception elements (P1 to P9) comprise identical first maximum external dimensions in the measurement direction and identical second maximum external dimensions in the width direction.

6. The encoder (100) according to claim 5, wherein the plurality of light reception elements (P1 to P9) comprise two second light reception elements (P1, P9) arranged in the measurement direction with the first light reception elements (P2 to P8) disposed between the two second light reception elements (P1, P9) in the measurement direction, the two second light reception elements (P1, P9) comprising edges (Eg) in the measurement direction parallel to each other in the width direction.

7. The encoder (100) according to claim 6, wherein the second light reception elements (P1, P9) each comprise a quadrilateral shape, and
   wherein the at least one first light reception element (P2 to P8) comprises a shape of the quadrilateral shape trimmed on corners of the quadrilateral shape on a side of the light source (131).

8. The encoder (100) according to any one of claims 1 to 7, wherein the plurality of light reception elements (P1 to P9) comprise a first set of light reception elements (P1 to P9) and a second set of light reception elements (P1 to P9) offset from the first set of light reception elements (P1 to P9) across the light source (131) in the width direction.

9. The encoder (100) according to any one of claims 1 to 8,
   wherein the light source (131) comprises a point light source configured to emit diffused light to the absolute pattern (SA1, SA2),
   wherein the absolute pattern (SA1, SA2) comprises a pattern to reflect the diffused light emitted from the point light source (131), and
   wherein the plurality of light reception elements (P1 to P9) are configured to receive the light reflected by the absolute pattern (SA1, SA2).

10. A motor (M) with an encoder (100) according to any one of claims 1 to 9.

# FIG. 1

FIG. 2

# FIG. 3

FIG. 4

FIG. 5

# FIG. 6

EP 3 032 225 A2

**FIG. 7**

# FIG. 8

# FIG. 9

# FIG. 10

# FIG. 11

# FIG. 12

EP 3 032 225 A2

# FIG. 13

EP 3 032 225 A2

# FIG. 14

EP 3 032 225 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4945674 B